# EUROPEAN PATENT SPECIFICATION

(11) **EP 3 099 482 B1**
(45) Date of publication and mention of the grant of the patent: **26.02.2020**
(21) Application number: 15743702.1
(22) Date of filing: 07.01.2015
(51) Int. Cl.: B32B 5/16, B32B 9/00, B22D 31/00, B32B 15/01, C21D 6/02, C21D 7/06, C22F 1/10, C22F 1/18

(54) **ENHANCED SURFACE STRUCTURE**
VERBESSERTE OBERFLÄCHENSTRUKTUR
STRUCTURE DE SURFACE AMÉLIORÉE

(30) Priority: 28.01.2014 US 201461932562 P
(43) Date of publication of application: 07.12.2016
(73) Proprietor: United Technologies Corporation, Farmington, CT 06032 (US)
(72) Inventor: JONES, Howard B., Glastonbury, CT 06033 (US)
(74) Representative: Dehns
(86) International application number: PCT/US2015/010404
(87) International publication number: WO 2015/116352

(56) References cited:
- EP-A1- 0 699 775
- EP-A1- 2 537 621
- WO-A2-01/90433
- US-A- 3 505 130
- US-A- 4 531 981
- US-A- 4 799 974
- US-A- 4 909 859
- US-A- 4 969 593
- US-A- 4 969 593
- US-B1- 6 215 191
- US-B1- 6 215 191
- US-B1- 6 521 059
- US-B1- 6 521 059
- R.P. Singh ET AL: "Recrystallization Behavior of Cold Rolled Alloy 718", Superalloys 718, 625 and various derivatives: proceedings of the International Symposium on the Metallurgy and Applications of Superalloys 718, 625 and Various Derivatives; June 23 - 26, 1991; Pittsburgh, Pa, 1 January 1991 (1991-01-01), pages 205-215, XP055563325, Warrendale, Pa. DOI: 10.7449/1991/Superalloys_1991_205_215 ISBN: 978-0-87339-173-3
- Anonymous: "Aluminum Alloys - Effects of Alloying Elements", , 30 September 2002 (2002-09-30), XP055563139, Retrieved from the Internet: URL:http://www.totalmateria.com/Article55. htm [retrieved on 2019-02-28]
- N. Lambert ET AL: "Structural Stability of Udimet-500, A Nickel-Base Superalloy", International Symposium on Structural Stability in Superalloys (1968), 1 January 1968 (1968-01-01), pages 312-345, XP055563328, DOI: 10.7449/1968/Superalloys_1968_312_345

## Description

### BACKGROUND

### 1. Field

The present disclosure relates to a method of forming a material having an at least partially recrystallized layer.

### 2. Description of Related Art

Turbomachine components are often made from castings using methods such as a lost-wax cast procedure or other forming methods. After casting, some components may be shot-blasted and/or grit-blasted to remove shell material, oxides, and improve surface finish of the casting. As a consequence of this blasting, an uncontrolled amount of plastic deformation is introduced in to the surface of this material. If the casting is heat treated this surface layer can recrystallize and leave a fine grain region on the surface. However, because the plastic deformation is uncontrolled the depth of the plastic zone is uncontrolled and/or irregular which will lead to an uncontrolled/irregular amount of recrystallization at the surface. The present methods are very chaotic and do not control the depth or quality of recrystallization of the surface layer. Modification of the surface composition can be followed by a phase transformation. Examples include nitriding and carburizing of steels and diffusion coatings in Ni alloys.

WO 01/90433 discloses a surface treatment process for enhancing the intergranular corrosion and intergranular cracking resistance of components fabricated from austenitic Ni-Fe-Cr based alloys.

Such conventional methods and systems have generally been considered satisfactory for their intended purpose. However, there is still a need in the art for improved techniques of forming materials having a recrystallized surface layer. The present disclosure provides solutions for this need.

### SUMMARY

In accordance with a first aspect of this disclosure there is provided a method according to claim 1.

The controlled plastic deformation can include at least one of shot-peening, controlled surface blasting, laser shot-peening, ultrasonic peening, explosion forming, or burnishing.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a cross-sectional schematic view of a formed composition in accordance with this disclosure, showing a uniform recrystallized layer of a desired depth; and
Fig. 2 is a cross-sectional schematic view of a formed composition in accordance with this disclosure, showing a predetermined recrystallized layer of a desired depth that covers only a portion of the non-recrystallized portion.

### DETAILED DESCRIPTION

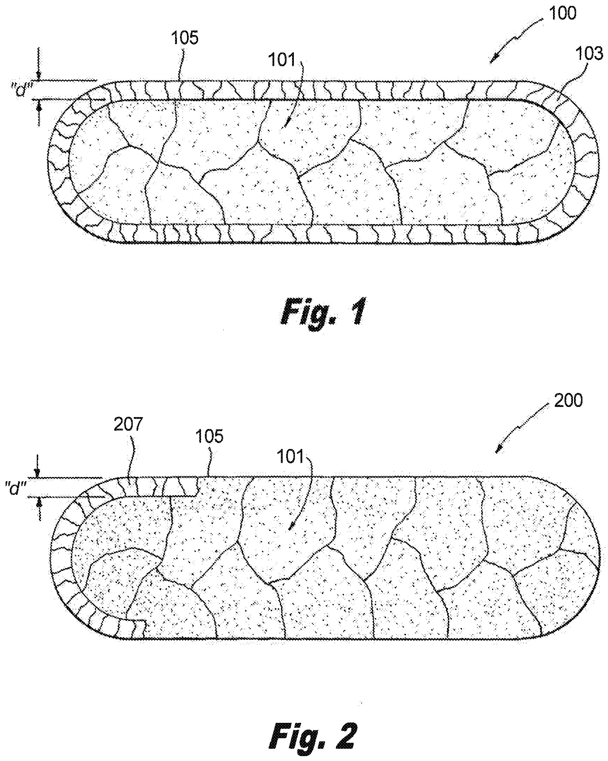

Reference will now be made to the drawings wherein like reference numerals identify similar structural features or aspects of the subject disclosure. For purposes of explanation and illustration, and not limitation, an embodiment of a formed composition in accordance with the disclosure is shown in Fig. 1 and is designated generally by reference character 100. Another embodiment of a formed composition in accordance with the disclosure, or aspects thereof, is provided in Fig. 2, as will be described. The systems and methods described herein can be used to improve high cycle fatigue life and/or other desirable characteristics of machine components.

In accordance with at least one aspect of this disclosure, a formed material 100 includes a composition including a non-recrystallized portion 101 that is not processed to deliberately affect the crystal structure and/or grain size thereof. The formed material 100 also includes a processed or recrystallized layer 103 of the composition with a predetermined depth "d".

For purposes of this disclosure, the term "recrystallized" means that the grain size and/or structure and/or other suitable material characteristics of the crystalline structure of the formed material have been modified from an initial formed condition (e.g., from the crystalline structure of a cast). For example, as shown in the drawings, the recrystallized layer 103 has a smaller grain size than the non-recrystallized portion 101.

The formed material 100 can be a cast, mold, or any other suitable type of manufacture that is formed in any suitable manner. The composition can be any suitable material, including, but not limited to, one or more metals, one or more metal alloys, and/or any other suitable formable composition having a non-processed portion after forming. In some embodiments, the composition can include one or more of nickel, titanium, carbon, iron, steel, IN718, and/or the like.

The recrystallized layer 103 forms at least part of a surface 105 of the composition that overlays the non-recrystallized portion 101. The recrystallized layer 103 can be uniform in depth as shown in Fig. 1. As shown in Fig. 2, in some embodiments, a partial recrystallized layer 207 can form only a portion of the surface of a formed material 200.

The depth of the recrystallized layer 103 "d" is 0.005 inches (about 0.127 mm) to 0.025 inches (about 0.635 mm). In some embodiments, the suitable depth "d" is about 0.010 inches (about 0.254 mm). Depth "d" can be about 1 to about 4 times as deep as layers inadvertently formed via known shot-blasting techniques. As disclosed herein, the recrystallized layer 103 can include a smaller grain size than a non-recrystallized portion 101 of the formed material 100. In some embodiments, the formed material can be a turbomachine component such as, but not limited to, compressor rotor blades, stator blades, cases, and/or housings.

In at least one aspect of this disclosure, a method of forming a material having an at least partially recrystallized layer 103 includes forming a composition into a predetermined shape having a surface 105. The forming leaves at least a portion of the surface 105 of the composition in a non-processed and/or non-recrystallized state. The forming step can be a casting process (e.g. lost-wax casting), a molding process, additive manufacturing, powder bed fusion, or any other suitable manufacturing process.

The method can also include cleaning the formed composition via any suitable method including shot blasting. The method can also include determining a desired depth "d" of at least a portion of a recrystallized layer 103. Certain material characteristics (e.g. high cycle fatigue, low cycle fatigue) are affected by the depth and uniformity of a crystallized surface layer, thus desired material characteristics can be achieved by selecting a desired depth "d" and/or a desired uniformity of a recrystallized layer 103 after forming.

The method can also include precipitation hardening reactions or recrystallizing at least a portion of the recrystallized layer 103 to the desired depth "d". In some embodiments, the recrystallizing step includes controlling a plastic deformation of the composition at the surface. The plastic deformation can include at least one of shot-peening, controlled surface blasting, laser shot-peening, ultrasonic peening, and/or burnishing such that the depth of plastic deformation is controlled to cause formation of recrystallized layer 103 of a desired depth "d".

The method can further include heat treating the composition to control intermediate phase reactions such as the precipitation of delta phase in IN718. The heat treating can be done after forming and/or during or after cleaning the formed material via, e.g., shot-blasting, and/or during any other suitable time. The heat treatment can be configured to cause precipitation of desired second phases of material (e.g. δ-phase at about 1550 deg. F, γ', γ", carbide-phases, etc.). Heat treating the composition to precipitate phases of the composition can occur at any suitable temperature and/or series of temperatures to cause precipitation of the desired phases. In some embodiments, the precipitation of second phases results in less grain size growth and facilitates recrystallization to a smaller grain size.

Hot isostatic pressing can also be performed on the composition to reduce porosity of the composition.

After the formed material 100 is cold worked and/or otherwise plastically deformed at the surface, the method can include heat treating the formed material 100 to facilitate one or more of recrystallization, reduction in grain size, and/or any other suitable material modification to achieve a desired recrystallized layer 103. For example, the formed material 100 may be exposed to a desired consistent and/or varying temperature during the manufacturing process to facilitate recrystallization at a desired depth "d" and/or to a desired grain size.

According to the present invention, a method includes casting a material into a cast having predetermined shape, removing the cast from the mold, then cleaning the cast by shot-blasting, then cold working a surface of the cast to facilitate recrystallization to desired depth, and then heat treating the cast to a suitable temperature to complete uniform recrystallization of the surface of the cast to a smaller grain size than the non-recrystallized portion. The method further includes heat treating the cast at a suitable temperature to precipitate a phase of the material after removing the cast from the mold and before plastically deforming the surface of the cast to a desired depth.

The methods and systems of the present disclosure, as described above and shown in the drawings, provide for enhanced material properties of certain manufactures.

## Claims

1. A method of forming a material (100) having an at least partially recrystallized layer (103), comprising:
casting a material into a cast having a predetermined shape to form an article having a surface;
removing the cast from the mold,
cleaning the removed cast by shot-blasting,
heat treating the removed cast at a suitable temperature to precipitate a second phase of the material before cold working the surface of the cast to a desired depth,
cold working the surface of the heat treated cast to a desired depth, and
heat treating the cold worked cast to a suitable temperature to complete uniform recrystallization of the surface of the cast to a smaller grain size than the non-recrystallized portion, wherein the depth of the recrystallized layer is 0.127 mm (0.005 inches) to 0.635 mm (0.025 inches).

2. The method of claim 1, wherein cold working includes at least one of shot-peening, controlled surface blasting, laser shot-peening, ultrasonic peening, explosion forming, or burnishing.

## Patentansprüche

1. Verfahren zum Bilden eines Materials (100), das eine zumindest teilweise umkristallisierte Schicht (103) aufweist, umfassend:
gießen eines Materials zu einem Guss, der eine vorbestimmte Form aufweist, um einen Artikel zu bilden, der eine Oberfläche aufweist;
entfernen des Gusses aus der Form,
reinigen des entfernten Gusses durch Strahlreinigen,
wärmebehandeln des entfernten Gusses bei einer geeigneten temperatur, um eine zweite Phase des Materials zu präzipitieren, bevor die Oberfläche des Gusses zu einer gewünschten Tiefe kaltgearbeitet wird,
kaltarbeiten der Oberfläche des wärmebehandelten Gusses zu einer gewünschten Tiefe, und
wärmebehandeln des kaltgearbeiteten Gusses zu einer geeigneten Temperatur, um einheitliche Umkristallisierung der Oberfläche des Gusses zu einer kleineren Körnergröße als der nicht umkristallisierte Abschnitt abzuschließen, wobei die Tiefe der umkristallisierten Schicht 0,127 mm (0,005 Zoll) bis 0,635 mm (0,025 Zoll) beträgt.

2. Verfahren nach Anspruch 1, wobei das Kaltarbeiten zumindest eines von Kugelstrahlen, kontrollierten Oberflächenstrahlen, Laserkugelstrahlen, Ultraschallkugelstrahlen, Explosionsumformen oder Polieren beinhaltet.

## Revendications

1. Procédé de formation d'un matériau (100) ayant une couche au moins partiellement recristallisée (103), comprenant :
le coulage d'un matériau en une coulée ayant une forme prédéterminée afin de former un article ayant une surface ;
le retrait de la coulée du moule,
le nettoyage de la coulée retirée par grenaillage,
le traitement thermique de la coulée retirée à une température appropriée pour précipiter une seconde phase du matériau avant le travail à froid de la surface de la coulée à une profondeur souhaitée,
le travail à froid de la surface de la coulée traitée thermiquement à une profondeur souhaitée, et
le traitement thermique de la coulée travaillée à froid à une température appropriée pour terminer la recristallisation uniforme de la surface de la coulée à une granulométrie plus petite que la partie non recristallisée, dans lequel la profondeur de la couche recristallisée est comprise entre 0,127 mm (0,005 pouce) et 0,635 mm (0,025 pouce).

2. Procédé selon la revendication 1, dans lequel le travail à froid comporte au moins l'un parmi le grenaillage, le décapage de surface commandé, le grenaillage au laser, le grenaillage par ultrasons, le formage par explosion ou le burnissage.
